(19) Europäisches Patentamt
European Patent Office
Office européen des brevets

(11) **EP 4 447 567 A1**

(12) **EUROPEAN PATENT APPLICATION**
published in accordance with Art. 153(4) EPC

(43) Date of publication:
**16.10.2024 Bulletin 2024/42**

(21) Application number: **22903529.0**

(22) Date of filing: **07.12.2022**

(51) International Patent Classification (IPC):
*H04W 56/00* (2009.01)

(52) Cooperative Patent Classification (CPC):
**H04W 56/00**

(86) International application number:
**PCT/CN2022/137300**

(87) International publication number:
**WO 2023/104108 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.12.2021 CN 202111509933**

(71) Applicant: **ZTE Corporation**
**Shenzhen, Guangdong 518057 (CN)**

(72) Inventor: **LIU, Feng**
**Shenzhen, Guangdong 518057 (CN)**

(74) Representative: **Vossius & Partner**
**Patentanwälte Rechtsanwälte mbB**
**Siebertstraße 3**
**81675 München (DE)**

(54) **TIME CALIBRATION METHOD AND DEVICE, AND COMPUTER-READABLE STORAGE MEDIUM**

(57) Provided in the present invention are a time calibration method and device, and a readable storage medium. In the time calibration method, a first data frame comprises a plurality of first code blocks, and a second data frame comprises a plurality of second code blocks, and therefore the first data frame and the second data frame can be used as a multiple frame comprising the plurality of code blocks, so as to be adapted to an Ethernet interface, which is divided into a plurality of sub-slots. In addition, according to an acquired first moment value, second moment value, third moment value and fourth moment value, the time offset of a device to be synchronized compared with a reference device can be known.

Obtaining a first data frame transmitted by the reference device, and obtaining a first moment value and a second moment value, the first data frame comprising a plurality of first code blocks, the first moment value for characterizing a local moment when an initial one of the first code blocks is transmitted from the reference device, the second moment value for characterizing a local moment when the initial one of the first code blocks is received by the to-be-calibrated device —— S100

In response to the first data frame, transmitting a second data frame to the reference device, and obtaining a third moment value and a fourth moment value, the second data frame comprising a plurality of second code blocks, the third moment value for characterizing a local moment when an initial one of the second code blocks is transmitted from the to-be-calibrated device, the fourth moment value for characterizing a local moment when the initial one of the second code blocks is received by the reference device —— S200

Performing time calibration based on the first moment value, the second moment value, the third moment value and the fourth moment value, to synchronize a local time of the to-be-calibrated device with the reference device —— S300

**FIG. 2**

## Description

### CROSS-REFERENCE TO RELATED APPLICATION(S)

This application is filed based on priority to a Chinese patent application No. 202111509933.X entitled "Time Calibration Method and Device, and Computer-Readable Storage Medium" filed on December 10, 2021, the disclosures of which are incorporated herein by reference in their entirety.

### FIELD

Embodiments of the present disclosure relate to the communication field, in particular a time calibration method and device, and a computer-readable storage medium.

### BACKGROUND

There is a need for time synchronization between various devices in the communication network. Nowadays, the typical interface employed in the communication network is an Ethernet interface. The Ethernet interface is a shared interface, and all the client services share one Ethernet physical interface, making it impossible to achieve hard tube isolation between messages of different clients. Therefore, in order to isolate messages of different clients, it is required to divide an Ethernet interface into a plurality of sub-slot tubes, to achieve hardware isolation among all the sub-slots, different clients are carried on different sub-slots, different clients do not have mutual influence from each other. According to the related technologies, a fine grain service carrying standard is provided, where a 10G interface is divided into 960 sub-slots such that client services can be carried on different sub-slots, to achieve the hardware isolation demand of the client services. However, after the related technologies divide the Ethernet interface into a plurality of sub-slots, the original Ethernet interface cannot directly transmit Ethernet messages, the devices in the communication network cannot use an original time synchronization manner of the Ethernet interface to perform time calibration.

### SUMMARY

Summary of the subject matter described herein is provided below. This Summary is provided not to limit the protection scope of the claims.

The present disclosure provides a time calibration method and device, and a readable storage medium, to enable devices in a communication network to perform time calibration based on an Ethernet interface when the Ethernet interface is divided into a plurality of sub-slots.

In a first aspect, the present disclosure provides a time calibration method applied to a to-be-calibrated device of a time calibration system comprising a reference device and the to-be-calibrated device, the time calibration method comprising:

obtaining a first data frame transmitted by the reference device, and obtaining a first moment value and a second moment value, the first data frame comprising a plurality of first code blocks, the first moment value for characterizing a local moment when an initial one of the first code blocks is transmitted from the reference device, the second moment value for characterizing a local moment when the initial one of the first code blocks is received by the to-be-calibrated device;

in response to the first data frame, transmitting a second data frame to the reference device, and obtaining a third moment value and a fourth moment value, the second data frame comprising a plurality of second code blocks, the third moment value for characterizing a local moment when an initial one of the second code blocks is transmitted from the to-be-calibrated device, the fourth moment value for characterizing a local moment when the initial one of the second code blocks is received by the reference device;

performing time calibration based on the first moment value, the second moment value, the third moment value and the fourth moment value, to synchronize a local time of the to-be-calibrated device with the reference device.

In a second aspect, the present disclosure provides a time calibration method applied to a reference device of a time calibration system comprising the reference device and a to-be-calibrated device, the time calibration method comprising:

generating a first data frame comprising a plurality of first code blocks;

transmitting the first data frame to the to-be-calibrated device, to cause the to-be-calibrated device to obtain a first moment value for characterizing a local moment when an initial one of the first code blocks of the first data frame is transmitted from the reference device;

obtaining a second data frame transmitted by the to-be-calibrated device, to cause the to-be-calibrated device to obtain a fourth moment value, and performing time calibration based on the first moment value and the fourth moment value, wherein the second data frame comprises a plurality of second code blocks, the fourth moment value is used to characterize a local moment when the initial one of the second code blocks is received by the reference device.

In a third aspect, the present disclosure provides a time calibration device comprising a memory, a processor and a computer program stored on the memory and operable on the processor, wherein the processor implements the time calibration method according to embodiments in the first or second aspect when performing the computer program.

In a fourth aspect, the present disclosure provides a computer-readable storage medium, where the computer-readable storage medium has computer-executable instructions stored thereon, the computer-executable instructions are used to cause a computer to perform the time calibration method according to embodiments in the first or second aspect.

The present disclosure includes: obtaining a first data frame transmitted by the reference device, and obtaining a first moment value and a second moment value, the first data frame comprising a plurality of first code blocks, the first moment value for characterizing a local moment when an initial one of the first code blocks is transmitted from the reference device, the second moment value for characterizing a local moment when the initial one of the first code blocks is received by the to-be-calibrated device; in response to the first data frame, transmitting a second data frame to the reference device, and obtaining a third moment value and a fourth moment value, the second data frame comprising a plurality of second code blocks, the third moment value for characterizing a local moment when an initial one of the second code blocks is transmitted from the to-be-calibrated device, the fourth moment value for characterizing a local moment when the initial one of the second code blocks is received by the reference device; performing time calibration based on the first moment value, the second moment value, the third moment value and the fourth moment value, to synchronize a local time of the to-be-calibrated device with the reference device. According to the solution provided by the present disclosure, the first data frame includes a plurality of first code blocks, the second data frame includes a plurality of second code blocks, thus the first and second data frames can serve as a multiframe including a plurality of code blocks to be adapted to the Ethernet interface divided into a plurality of sub-slots. In addition, the first moment value is used to characterize a local moment when the initial one of the first code blocks is transmitted from the reference device, the second moment value is used to characterize a local moment when the initial one of the first code blocks is received by the to-be-calibrated device, the third moment value is used to characterize a local moment when the initial one of the second code blocks is transmitted from the to-be-calibrated device, and the fourth moment value is used to characterize a local moment when the initial one of the second code blocks is received by the reference device. Therefore, based on the first moment value, the second moment value, the third moment value and the fourth moment value, a time offset of the to-be-synchronized device relative to the reference device can be known, such that the to-be-synchronized device can change its local time to eliminate the time offset relative to the reference device. In a word, the present disclosure can enable devices in the communication network to be calibrated in time based on the Ethernet interface in the case where the Ethernet interface is divided into a plurality of sub-slots.

Other features and advantages of the present disclosure will be described below in the Description, and a part thereof could become obvious from the Description, or be learned through implementing the present disclosure. The objective and other advantages of the present disclosure could be implemented or acquired through the contents particularly indicated in the Description, claims and drawings.

## BRIEF DESCRIPTION OF THE DRAWINGS

The accompanying drawings are provided for further understanding of the technical solution of the present disclosure, and form a part of the Description, which are used, together with embodiments of the present disclosure, to explain the technical solution of the present disclosure, not suggesting any limitation thereto.

Fig. 1 illustrates a schematic diagram of a time calibration system provided by an embodiment of the present disclosure;
Fig. 2 illustrates a flowchart of a time calibration method provided by an embodiment of the present disclosure;
Fig. 3 illustrates a schematic diagram of a structure of a fine grain base unit provided by the present disclosure;
Fig. 4 illustrates a schematic diagram of a multiframe provided by the present disclosure;
Fig. 5 illustrates a schematic diagram of a 64/66 encoding structure provided by the present disclosure;
Fig. 6 illustrates a diagram of a specific structure of a fine grain base unit provided by the present disclosure;
Fig. 7 illustrates a schematic diagram of mapping a code block to a fine grain base unit provided by the present disclosure;
Fig. 8 illustrates a specific flowchart of obtaining a first moment value and a second moment value provided by a further embodiment of the present disclosure;
Fig. 9 illustrates a specific flowchart of obtaining, based on a first data frame, a first moment value provided by a further embodiment of the present disclosure;
Fig. 10 illustrates a diagram of a structure of a cell overhead portion of a fine grain base unit provided by the present disclosure;
Fig. 11 illustrates a specific flowchart of obtaining a first moment value provided by a further embodiment of the present disclosure;
Fig. 12 illustrates a specific flowchart of obtaining a third moment value and a fourth moment value provided by a further embodiment of the present disclosure;

Fig. 13 illustrates a specific flowchart of obtaining a second data frame provided by a further embodiment of the present disclosure;

Fig. 14 illustrates a specific flowchart of performing time calibration provided by a further embodiment of the present disclosure;

Fig. 15 illustrates a flowchart of a time calibration method provided by a further embodiment of the present disclosure;

Fig. 16 illustrates a flowchart of a time calibration method provided by a further embodiment of the present disclosure;

Fig. 17 illustrates a specific flowchart of carrying a time synchronization message in a first data frame provided by a further embodiment of the present disclosure;

Fig. 18 illustrates a schematic diagram of carrying a PTP message in a fine grain base unit provided by an example of the present disclosure;

Fig. 19 illustrates a schematic diagram of carrying a PTP message in a fine grain base unit provided by a further example of the present disclosure;

Fig. 20 illustrates a flowchart of a time calibration method provided by a further embodiment of the present disclosure;

Fig. 21 illustrates a flowchart of a time calibration method provided by a further embodiment of the present disclosure; and

Fig. 22 illustrates a schematic diagram of a time calibration device provided by an embodiment of the present disclosure.

## DETAILED DESCRIPTION OF EMBODIMENTS

In order to make the objective, technical solution and advantages of the present disclosure more apparent, further description will be made about the present disclosure with reference to the embodiments and the accompanying drawings. It should be appreciated that the embodiments described here are only provided to explain the present disclosure, rather than limiting the present disclosure.

It is worth noting that, although functional module divisions are employed in the apparatus diagrams and logical sequences are shown in the flowcharts, in some circumstances, steps shown or depicted can be performed according to module divisions different from those provided in the apparatus diagrams, or sequences different from those shown in the flowcharts. The terms "first," "second" and the like in the description, claims and drawings are used to differentiate similar objects, rather than depicting a particular sequence or order.

Nowadays, the main interface of the communication network is an Ethernet interface, and there is a need for achieving time synchronization between various network devices in the communication network. All the network devices in the communication network transmit services using Ethernet messages, and clients carried by each network device share a same Ethernet physical interface to transmit or receive Ethernet messages. When the Ethernet interface transmits a plurality of client services, all the client services share the same physical interface, making it impossible to achieve the hard isolation effect between services of different clients. Therefore, in some applications, it is required to divide an Ethernet interface into a plurality of sub-slot tubes, all the sub-slots are isolated from one another to achieve the rigid hardware-isolated transmission effect, so that different clients are carried over different sub-slots, avoiding mutual impacts of different clients. China Mobile has formulated a fine-grain service carrying standard, namely *Technical Requirements for Fine-Grain Slicing of 10GE Interface.* In the standard solution, a 10GE Ethernet interface is divided into 960 sub-slots such that client services can be carried over different sub-slots, to achieve a hard isolation effect between client services. After the 10GE Ethernet interface is divided into 960 sub-slots, the original Ethernet interface cannot directly transmit Ethernet messages, nor can the network devices in the communication network use the Ethernet interface to perform time synchronization and time calibration.

The present disclosure provides a time calibration method applied to a to-be-calibrated device of a time calibration system, where the time calibration system comprises a reference device and a to-be-calibrated device. The time calibration method includes: obtaining a first data frame transmitted by the reference device, and obtaining a first moment value and a second moment value, the first data frame comprising a plurality of first code blocks, the first moment value for characterizing a local moment when an initial one of the first code blocks is transmitted from the reference device, the second moment value for characterizing a local moment when the initial one of the first code blocks is received by the to-be-calibrated device; in response to the first data frame, transmitting a second data frame to the reference device, and obtaining a third moment value and a fourth moment value, the second data frame comprising a plurality of second code blocks, the third moment value for characterizing a local moment when an initial one of the second code blocks is transmitted from the to-be-calibrated device, the fourth moment value for characterizing a local moment when the initial one of the second code blocks is received by the reference device; performing time calibration based on the first moment value, the second moment value, the third moment value and the fourth moment value, to synchronize a local time of the to-be-calibrated device with the reference device. According to the solution provided by the present disclosure, the first data frame includes a plurality of first code blocks, the second data frame includes a plurality of second code blocks, and the first and second data frames therefore can serve as a multiframe including a plurality of code blocks to be adapted to the Ethernet interface divided into a plurality of sub-slots. In addition, since the first moment value is used to characterize a local moment when the initial one of the first code blocks is transmitted from the reference device, the second moment value is used to characterize a local moment when the initial one of the first code blocks is received by the to-be-calibrated device, the third moment value is used to characterize a local moment when the initial one of the second code blocks is transmitted from the to-be-calibrated device, and the fourth moment value is used to characterize a local moment when the initial one of the second code blocks is received by the reference device. Therefore, based on the first moment value, the second moment value, the third moment value and the fourth moment value, a time offset of the to-be-synchronized device relative to the reference device can be known, such that the to-be-synchronized device can change its local time to eliminate the time offset relative to the reference device. In a word, the present disclosure can enable devices in the communication network to be calibrated in time based on the Ethernet interface in the case where the Ethernet interface is divided into a plurality of sub-slots.

Hereinafter, reference will be made to the drawings to further describe the present disclosure.

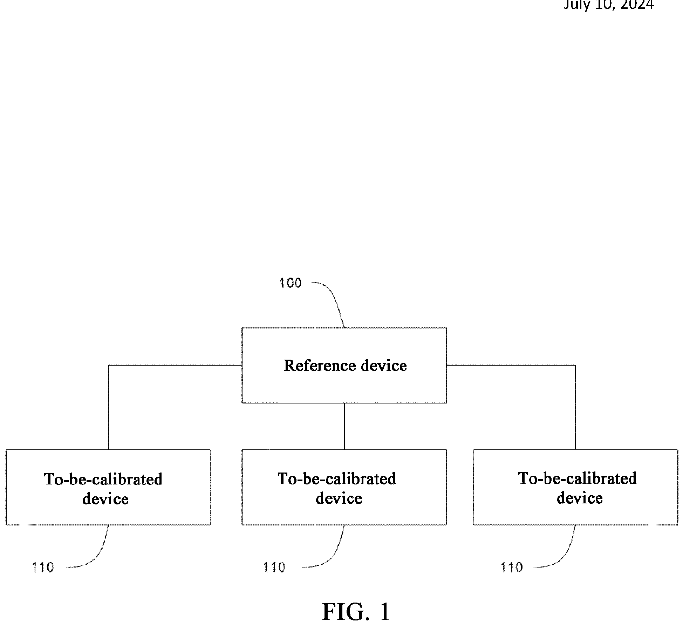

Fig. 1 illustrates a schematic diagram of a time calibration system provided by an embodiment of the present disclosure. In the example of Fig. 1, the time calibration system includes a reference device 100 and a to-be-calibrated device 110. Bi-directional communication can be performed between the reference device 100 and the to-be-calibrated device 110. The local time of the reference device 100 is used as a reference time, and the local time of the to-be-calibrated device 110 needs to be synchronized with the reference time.

It is worth noting that, in the time calibration system, there may be one or more to-be-calibrated devices 110, which is not specifically limited here.

The time calibration system and the application scenario as described here are provided to make the technical solution of the present disclosure much clearer, without formulating a limitation to the technical solution provided by the present disclosure. It would be appreciated by those skilled in the art that, even with the development of the time calibration system and emergence of new application scenarios, the technical solution provided by the present disclosure can still be applied to solve similar technical problems.

It is to be understood by those skilled in the art that the time calibration system as shown in Fig. 1 does not formulating a limitation to the present disclosure, and the time calibration system may include more or fewer components than those shown in Fig. 1, may include a combination of some components, or may include different component arrangements.

On the basis of the above time calibration system, various embodiments of the time calibration method according to the present disclosure will be described below.

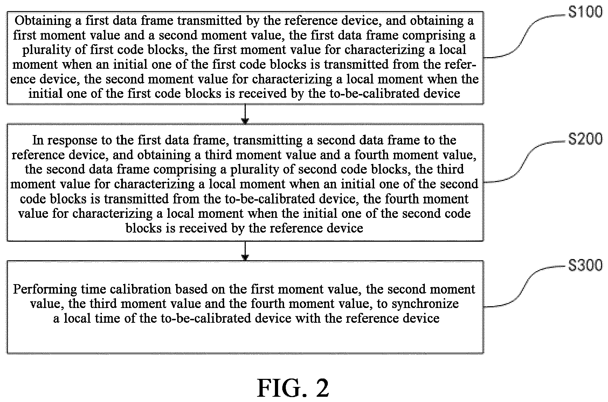

As shown in Fi. 2, Fig. 2 illustrates a flowchart of a time calibration method provided by an embodiment of the present disclosure, which can be applied to a to-be-calibrated device of a time calibration system. In the example of Fig. 2, the time calibration method according to the present disclosure includes, but is not limited to, step S 100, step S200 and step 5300.

In step S 100, obtaining a first data frame transmitted by the reference device, and obtaining a first moment value and a second moment value, where the first data frame includes a plurality of first code blocks, the first moment value is used to characterize a local moment when an initial one of the first code blocks is transmitted from the reference device, and the second moment value is used to characterize a local moment when the initial one of the first code blocks is received by the to-be-calibrated device.

The first data frame includes a plurality of first code blocks, and the first data frame therefore can act as a multiframe including a plurality of first code blocks to be adapted to the Ethernet interface divided into a plurality of sub-slots.

In some embodiments, the first data frame includes a plurality of Fine Grain Base Units (FG-BUs) each including a plurality of first code blocks.

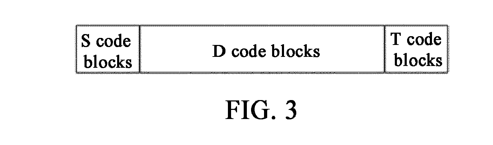

Referring to Fig. 3, Fig. 3 illustrates a schematic diagram of a structure of a fine grain base unit provided by the present disclosure. In the example of Fig. 3, the FG-BU is comprised of S code block(s), D code block(s) and T code block(s), where the S code block represents a message starting code block, the D code block represents a data code block, and the T code block represents a message ending code block.

Specifically, the first data frame includes a plurality of FG-BUs, the first code blocks are used to represent the S code block(s), the D code block(s) and the T code block(s) included in the FG-BU, and each FG-BU is comprised of one S code block, 195 D code blocks and one T code block.

Specifically, the FG-BU as mentioned above is defined by the *Technical Requirements for Fine-Grain Slicing of 10GE Interface* issued by China Mobile Research Institute.

Specifically, the S code block, the D code block and the T code block are defined according to the Ethernet 802.3 Standard.

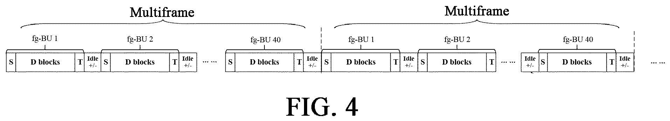

Referring to Fig. 4, Fig. 4 illustrates a schematic diagram of a multiframe provided by the present disclosure. In the example of Fig. 4, each multiframe includes a plurality of FG-BUs.

In step S200, in response to the first data frame, transmitting a second data frame to the reference device, and obtaining a third moment value and a fourth moment value, where the second data frame includes a plurality of second code blocks, the third moment value is used to characterize a local moment when an initial one of the second code blocks is transmitted from the to-be-calibrated device, the fourth moment value is used to characterize a local moment when the initial one of the second code blocks is received by the reference device

The second data frame includes a plurality of second data blocks, and the second data frame therefore can act as a multiframe including a plurality of first code blocks to be adapted for the Ethernet interface divided into a plurality of sub-slots.

In some embodiments, the second data frame includes a plurality of FG-BUs each including a plurality of second code blocks.

Specifically, the second data frame includes a plurality of FG-BUs, the second code blocks are used to represent the S code block(s), the D code block(s) and the T code block(s) included in the FG-BU, and each FG-BU is comprised of one S code block, 195 D code blocks and one T code block.

In step S300, performing time calibration based on the first moment value, the second moment value, the third moment value and the fourth moment value, to synchronize a local time of the to-be-calibrated device with the reference device.

The first data frame includes a plurality of first code blocks, the second data frame includes a plurality of second code blocks, and the first and second data frames therefore can act as a multiframe including a plurality of code blocks to be adapted to the Ethernet interface divided into a plurality of sub-slots. In addition, the first moment value is used to characterize a local moment when the initial one of the first code blocks is transmitted from the reference device, the second moment value is used to characterize a local moment when the initial one of the first code blocks is received by the to-be-calibrated device, the third moment value is used to characterize a local moment when the initial one of the second code blocks is transmitted from the to-be-calibrated device, and the fourth moment value is used to characterize a local moment when the initial one of the second code blocks is received by the reference device. Therefore, based on the first moment value, the second moment value, the third moment value and the fourth moment value, a time offset of the to-be-synchronized device relative to the reference device can be known, such that the to-be-synchronized device can change its local time to eliminate the time offset relative to the reference device. In a word, the present disclosure can enable devices in the communication network to be calibrated in time based on the Ethernet interface in the case where the Ethernet interface is divided into a plurality of sub-slots.

It is worth noting that the local moment refers to a moment determined by a device in the communication network according to the local time thereof.

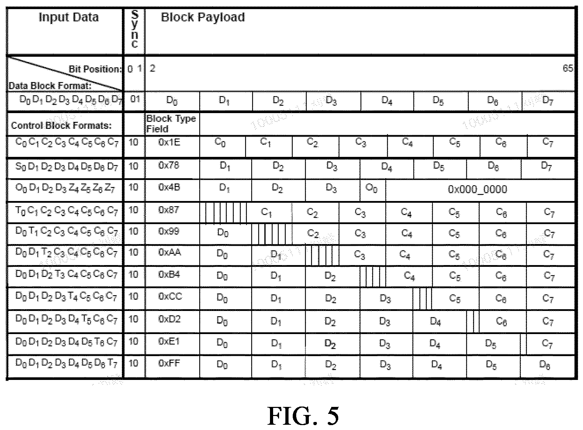

Referring to Fig. 5, Fig. 5 illustrates a schematic diagram of a 64/66 encoding structure provided by the present disclosure. In the example of Fig. 5, a 66-bit code block has a length of 66 bits. The first two bits represent a synchronization (Sync) header, where when the Sync header is "10," it is indicated that the code block is a control block code block. The first byte following the Sync header is a Block Type field, and different Block Type fields represent different control type code blocks. When the Sync header is "01," the data block is indicated, and 64 bits following the Sync header represent a data content. In the FG-BU, the format of the S code block is an S0 control type, and the Block Type field is "0x78;" the T code block employs a T7 code, and the Block Type field is "0xFF;" the intermediate 195 D code blocks are data code blocks.

In some embodiments, the 64/66 encoding structure is defined according to the Ethernet 802.3 Standard.

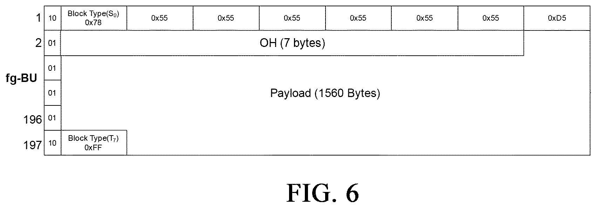

Referring to Fig. 6, Fig. 6 illustrates a diagram of a specific structure of a fine grain base unit provided by the present disclosure. In the example of Fig. 6, the 1st line is the S code block with the block content of "10+0x78+6*0x55+0xD5", the 2nd through 196th lines are D code blocks, where the first 7 bytes transmit OverHead (OH) information, and the remaining part transmit a payload of a slot; the last code block is the T7 code block, where the content of the Block Type field before the code blocks is "10+0xFF," and the last 7 bits in the T7 code block transmit the payload of the slot. In the FG-BU structure, the payload has a size of 1560 bytes which are divided into 24 sub-slots each having a size of 65 bytes. When 40 FG-BUs form an FG-BU set, namely a multiframe, the mutiframe includes 960 slots therein.

It would be appreciated that the number of FG-BUs included in a single multiframe (i.e., a single first or second data frame) is not specifically limited here. For example, a single multiframe may include 40 FG-BUs. For another example, a single multiframe may also include 20 FG-BUs. This is not specifically limited here. In the case where a single multiframe includes 20 FG-BUs, the multiframe includes 480 slots therein.

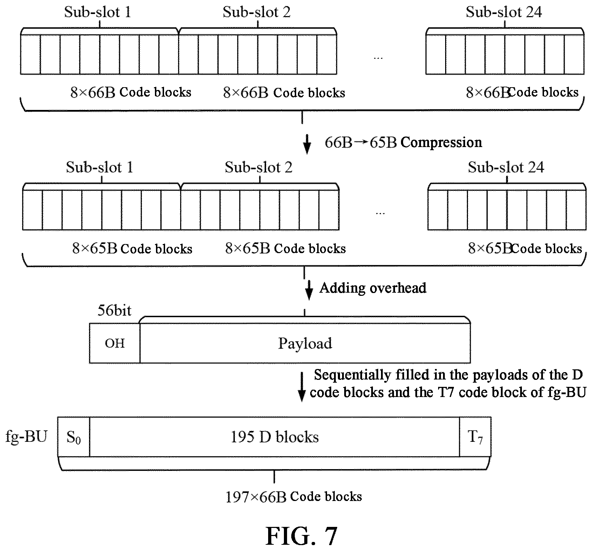

Referring to Fig. 7, Fig. 7 illustrates a schematic diagram of mapping a code block to a fine grain base unit provided by the present disclosure. In the example of Fig. 7, when a client service is transmitted via the FG-BU, 64/66 encoding is first performed for the client service, and the encoded client code block stream is split according to eight 66-bit code block sets. For the eight 66-bit code block sets, the Sync header portion of each code block is compressed before mapping, the Sync header value of "10" is compressed to "1," and the Sync header value of "01" is compressed to "0." In this way, the eight 66-bit code blocks are compressed to eight 65-bit code blocks. The compressed eight 65-bit code blocks are mapped into a certain slot of the FG-BU payload area, the FG-BU is formed after increasing the FG-BU overhead fields, the front S block and the last T block, and the client service is finally transmitted via the FG-BU.

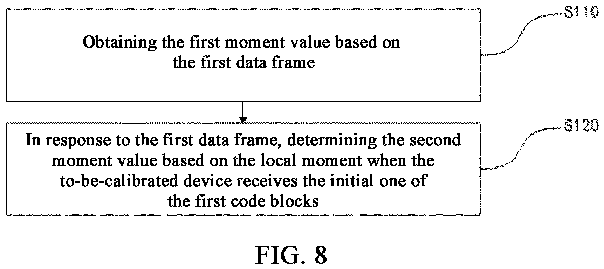

Referring to Fig. 8, Fig. 8 illustrates a specific flowchart of obtaining a first moment value and a second moment value provided by a further embodiment of the present disclosure. In the example of Fig. 8, step S100 includes, but is not limited to, steps S110 and step S120:

step S110, obtaining the first moment value based on the first data frame;

step S 120, in response to the first data frame, determining the second moment value based on the local time of the initial one of the first code blocks received by the to-be-calibrated device.

In some embodiments, the first data frame carries the first moment value, and the to-be-calibrated device therefore can obtain the first moment value based on the first data frame.

In some embodiments, the local moment when the to-be-calibrated device receives the initial one of the first code blocks is a moment recorded according to the local time of the to-be-calibrated device when the S code block of the initial FG-BU in the first data frame is received by the to-be-calibrated device.

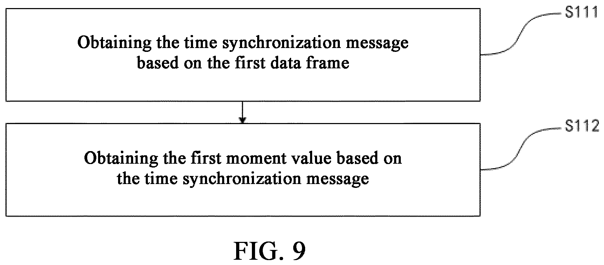

Referring to Fig. 9, Fig. 9 illustrates a specific flowchart of obtaining, based on the first data frame, the first moment value provided by a further embodiment of the present disclosure. In the example of Fig. 9, step S110 includes, but is not limited to, steps S 111 and step S112:

step S111: obtaining a time synchronization message based on the first data frame; and

step S112: obtaining the first moment value based on the time synchronization message.

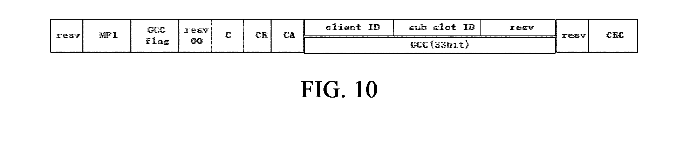

Referring to Fig. 10, Fig. 10 illustrates a structural diagram of a cell overhead portion of a fine grain base unit provided by the present disclosure. In the example of Fig. 8, the cell overhead portion is used to indicate a sequence number, management information, slot adjustment information, and the like, of a cell. The cell overhead portion consists of 7 bytes, where an MFI field indicates a sequence number and a multiframe structure of the cell, a GCC flag field is used to indicate a General Communication Channel (GCC) field function: when a GCC Flag value is 11, the following shared fields are used as the GCC channel; when the GCC flag value is 00, the following shared fields are used as a client ID field, a sub-slot ID field and a RESV field. The C field represents a configuration command, the CR field represents a configuration application, the CA field represents a configuration response. The above three fields are used for client slot configuration. The RESV is a reserved field, and the CRC field is used for verification function of an overhead content.

In some embodiments, the first data frame includes a plurality of FG-BUs each including a plurality of code blocks. The FG-BU is provided with a GCC field, and the time synchronization message is carried at a position where the GCC field is located.

Specifically, the time synchronization message is a Precision Time Protocol (PTP) synchronization message. The reference device generates an FG-BU of the first data frame and maps the client service to an FG-BU bearer. When the FG-BU is transmitted, the PTP synchronization message is inserted into the GCC field of the cell overhead portion of the FG-BU, and therefore the PTP synchronization message can be transmitted, together with the FG-BU, to the to-be-synchronized device.

Specifically, when the FG-BU of the first data frame is transmitted from the Ethernet port of the reference device, a transmission moment of an FG-BU initial block (i.e., an S block) is recorded according to the local time of the reference device, and the moment is the first moment value which may be carried in the PTP synchronization message to be transmitted to the to-be-calibrated device. Upon receiving the FG-BU carrying the PTP synchronization message, the to-be-calibrated device records the receiving moment of the FG-BU initial block (i.e., the receiving moment of the S block), namely the second moment value, according to the local time of the to-be calibrated device.

Specifically, the GCC field in the FG-BU only has 33 bytes, the PTP synchronization message is an Ethernet message having more than 64 bytes, an FG-BU cannot carry the PTP synchronization message. Therefore, the PTP synchronization message is carried by a plurality of FG-BUs in the present disclosure.

Specifically, the PTP synchronization message is first subject to 64/66 encoding to be converted into a code block stream having a length of 66 bits, i.e., a plurality of message code blocks each having a length of 66 bits. A GCC field in an FG-BU only has 33 bits and therefore can only carry a 33-bit PTP message. In the case, the single message code block is split into two sub-code blocks, to thus cause the GCC field of a single FG-BU to carry a half of the 66-bit code block, i.e., a sub-code block. Hence, the GCC fields in two consecutive FG-BUs carry a complete 66-bit code block. A plurality of consecutive FG-BUs are combined to carry a complete PTP synchronization message.

It is to be noted that the PTP synchronization message may be carried starting from the initial FG-BU of the first data frame, or may be carried starting from a non-initial FG-BU of the first data frame. This is not specifically limited here.

It is to be noted that when the PTP synchronization message is carried starting from the initial FG-BU of the first data frame, the first moment value can be determined based on a moment when the S code block of the initial FG-BU is transmitted from the Ethernet port of the reference device, and the second moment value can be determined based on a moment when the S code block of the initial FG-BU is received by the to-be-synchronized device, where the first code blocks can be used to characterize all the code blocks or the initial code blocks (i.e., the S code blocks) of the FG-BUs.

It is to be noted that when the PTP synchronization message is carried starting from a non-initial FG-BU of the first data frame, the first moment value can be determined based on a moment when the initial code block of the FG-BU first carrying the PTP synchronization message (i.e., the S code block of the FG-BU carrying the PTP synchronization message) is transmitted from the Ethernet port of the reference device, and the second moment value can be determined based on a moment when the S code block of the FG-BU carrying the PTP synchronization message is received by the to-be-synchronized device, where the first code block can be used to characterize all the code blocks or the initial code block (i.e., the S code block) of the initial FG-BU carrying the PTP synchronization message.

In some embodiments, the local time of transmitting the first code block from the reference device refers to a moment of transmitting the initial code block in the fine grain base unit where the time synchronization message is located, which is recorded according to the local time of the reference device, or a moment of transmitting the initial code block of the initial fine grain base unit in the first data frame where the time synchronization message is located; the local time of receiving the first code block by the to-be-calibrated device refers to a moment of receiving an initial code block in the fine grain base unit where the time synchronization message is located, which is recorded according to the local time of the to-be-calibrated device, or a moment of receiving the initial code block of the initial fine grain base unit in the first data frame where the time synchronization message is located.

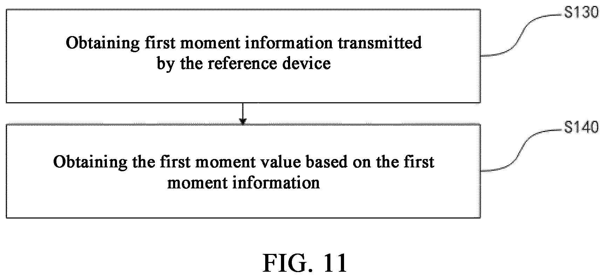

Referring to Fig. 11, Fig. 11 illustrates a specific flowchart of obtaining a first moment value provided by a further embodiment of the present disclosure. In the example of Fig. 11, step S100 further includes, but is not limited to, steps S130 and step S140:

step S130, obtaining first moment information transmitted by the reference device;
step S140, obtaining first moment value based on the first moment information.

It is to be noted that the first moment value may, or may not, be carried in the PTP synchronization message of the first data frame, which is not specifically limited here. In the case where the first moment value is not carried in the PTP synchronization message of the first data frame, the first moment value can be carried in first moment information. The first moment information can be transmitted separately by the reference device to the to-be-calibrated device after the first data frame is transmitted, to avoid the situation where the processing speed of the reference device is not sufficient to support the reference device to map the first moment to the PTP synchronization message of the first data frame after transmitting the initial one of the code blocks of the first data frame. In this way, the present disclosure can reduce the performance requirements for the reference device, thus improving the stability.

It is to be noted that the first moment information may be a multiframe comprised of a plurality of FG-BUs, or may be of other data structure capable of carrying the first moment value. This is not specifically limited here.

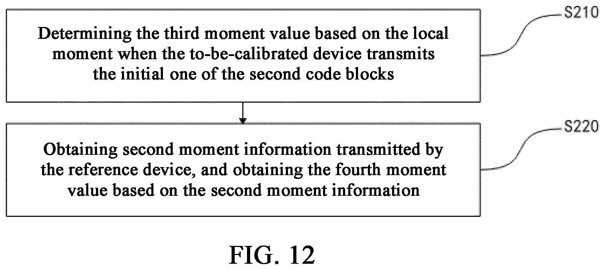

Referring to Fig. 12, Fig. 12 illustrates a specific flowchart of obtaining a third moment value and a fourth moment value provided by a further embodiment of the present disclosure. In the example of Fig. 12, step S200 includes, but is not limited to, steps S210 and step S220:

step S210, determining a third moment value based on a local time when the to-be-calibrated device transmits an initial one of the second code blocks;
step S220, obtaining the second moment information transmitted by the reference device, and obtaining a fourth moment value based on the second moment information.

In some embodiments, the second data frame carries a time response message which carries one or more of the first moment value, the second moment value and the third moment value. The second data frame includes a plurality of FG-BUs each including a plurality of code blocks. The fine grain base unit is provided with a GCC field, and the time response message is carried at a position where the GCC field is located.

Specifically, the time synchronization message is a Precision Time Protocol (PTP) response message. The to-be-calibrated device generates an FG-BU of the second data frame and maps the client service to an FG-BU bearer. When the FG-BU is transmitted, the PTP response message is inserted into the GCC field of the cell overhead portion of the FG-BU, and therefore the PTP response message can be transmitted, together with the FG-BU, to the to-be-synchronized device.

Specifically, when the FG-BU of the second data frame is transmitted from the Ethernet port of the to-be-calibrated device, a transmission moment of an FG-BU initial block (i.e., an S block) is recorded according to the local time of the to-be-calibrated device, and the moment is the third moment value which can be carried in the PTP synchronization message to be transmitted to the reference device. Upon receiving the FG-BU carrying the PTP response message, the reference device records the receiving moment of the FG-BU initial block (i.e., the receiving moment of the S block), namely the fourth moment value, according to the local time of the reference device.

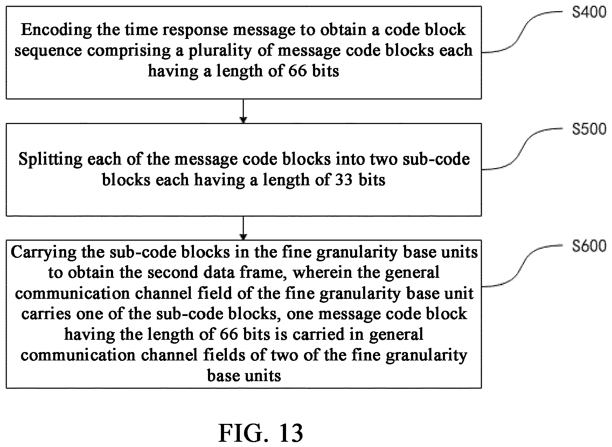

Referring to Fig. 13, Fig. 13 illustrates a specific flowchart of obtaining a second data frame provided by a further embodiment of the present disclosure. In the example of Fig. 13, the time synchronization method according to the present disclosure includes, but is not limited to, step S400, step S500 and step S600:

step 5400, encoding the time response message to obtain a code block sequence that includes a plurality of message code blocks each having a length of 66 bits;
step S500, splitting each message code block into two sub-code blocks each having a length of 33 bits; step 5600, carrying the sub-code blocks in fine grain base units to obtain the second data frame, where a general communication channel field of the fine grain base unit carries a sub-code block, and a message code block with a length of 66 bits is carried in general communication channel fields of two fine grain base units.

Specifically, the GCC field in the FG-BU only has 33 bits, the PTP response message is an Ethernet message having more than 64 bytes, an FG-BU cannot carry the PTP response message. Therefore, the PTP response message is carried by a plurality of FG-Bus in the present disclosure.

Specifically, the PTP response message is first subject to 64/66 encoding to be converted into a code block stream having a length of 66 bits, i.e., a plurality of message code blocks each having a length of 66 bits. A GCC field in an FG-BU only has 33 bits and therefore can only carry a 33-bit PTP message. Therefore, the single message code block is split into two sub-code blocks, to thus cause the GCC field of a single FG-BU to carry a half of the 66-bit code block, i.e., a sub-code block. Hence, the GCC fields in two consecutive FG-BUs carry a complete 66-bit code block. A plurality of consecutive FG-BUs are combined to carry a complete PTP response message.

It is to be noted that the PTP response message may be carried starting from the initial FG-BU of the second data frame, or may be carried starting from a non-initial FG-BU of the second data frame. This is not specifically limited here.

It is to be noted that when the PTP response message is carried starting from the initial FG-BU of the second data frame, the third moment value can be determined based on a moment when the S code block of the initial FG-BU is transmitted from the Ethernet port of the to-be-calibrated device, and the fourth moment value can be determined based on a moment when the S code block of the initial FG-BU is received by the to-be-synchronized device, where the second code blocks can be used to characterize all the code blocks or the initial code block (i.e., the S code block) of the FG-BU.

It is to be noted that when the PTP response message is carried starting from a non-initial FG-BU of the second data frame, the third moment value can be determined based on a moment when the initial code block of the FG-BU first carrying the PTP response message (i.e., the S code block of the FG-BU carrying the PTP response message) is transmitted from the Ethernet port of the to-be-calibrated device, and the fourth moment value can be determined based on a moment when the S code block of the FG-BU carrying the PTP response message is received by the to-be-synchronized device, where the second code block can be used to characterize all the code blocks or the initial code block (i.e., the S code block) of the FG-BU first carrying the PTP response message.

It is to be noted that the third moment value may be carried in the PTP response message of the second data frame, or may not be carried in the PTP response message of the second data frame, which is not specifically limited here. In the case where the third moment value is not carried in the PTP response message of the second data frame, the third moment value can be stored directly locally in the to-be-calibrated device; in the case where the third moment value is carried in the PTP response message of the second data frame, the second moment information transmitted by the reference device to the to-be-synchronized device can simultaneously carry the third moment value and the fourth moment value.

It is to be noted that the second moment information may be a multiframe comprised of a plurality of FG-BUs, or may be of other data structure capable of carrying the fourth moment value. This is not specifically limited here.

In some embodiments, the local time of transmitting the second code block from the to-be-calibrated device refers to a moment of transmitting the initial code block in the FG-BU where the time response message is located, which is recorded according to the local time of the to-be-calibrated device, or a moment of transmitting the initial code block of the initial FG-BU in the second data frame where the time response message is located; the local time of receiving the second code block by the to-be-calibrated device refers to a moment of receiving an initial code block in the FG-BU where the time response message is located, which is recorded according to the local time of the reference device, or a moment of receiving the initial code block of the initial FG-BU in the second data frame where the time response message is located.

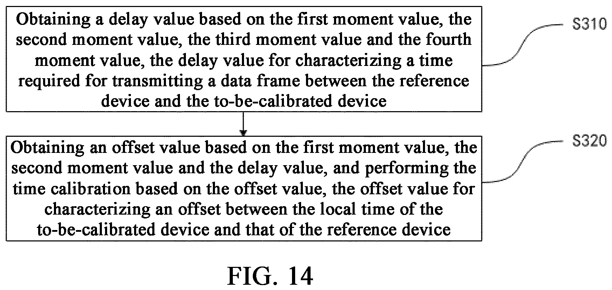

Referring to Fig. 14, Fig. 14 illustrates a specific flowchart of performing time calibration provided by a further embodiment of the present disclosure. In the example of Fig. 14, step S300 includes, but is not limited to, steps S310 and step S320:

> step S310, obtaining a delay value based on the first moment value, the second moment value, the third moment value and the fourth moment value, where the delay value is used to characterize a time required for transmitting a data frame between the reference device and the to-be-calibrated device;
> step S320, obtaining an offset value based on the first moment value, the second moment value and the delay value, and performing time calibration based on the offset value, where the offset value is used to characterize an offset between a local time of the to-be-calibrated device and a local time of the reference device.

In some embodiments, if a delay time of a path from the reference device to the to-be-calibrated device and a delay time of a path from the to-be-calibrated device to the reference device are identical (i.e., the delay times, namely the delay values, of the paths in two directions are the same), and the time offset between the to-be-calibrated device and the reference device is the offset value, the first moment value, the second moment value, the third moment value, the fourth moment value, the delay value and the offset value meet the following relationships:

$$T2 = T1 + X + Y$$

$$T4 = T3 + X - Y$$

Wherein, T1 is the first moment value, T2 is the second moment value, T3 is the third moment value, T4 is the fourth moment value, X is the delay value, and Y is the offset value. Based on the above equations, the following can be obtained:

$$X = ((T2 - T1) + (T4 - T3)) / 2$$

$$Y = T2 - T1 - X$$

$$Y = T3 + X - T4$$

Therefore, the obtained offset value is the time offset size between the to-be-calibrated device and the reference device. The to-be-calibrated device is calibrated based on the offset value, to achieve time synchronization between the to-be-calibrated device after calibration and the reference device.

In some embodiments, step S300 further includes obtaining the offset value based on the third moment value, the fourth moment value and the delay value, and performing time calibration based on the offset value.

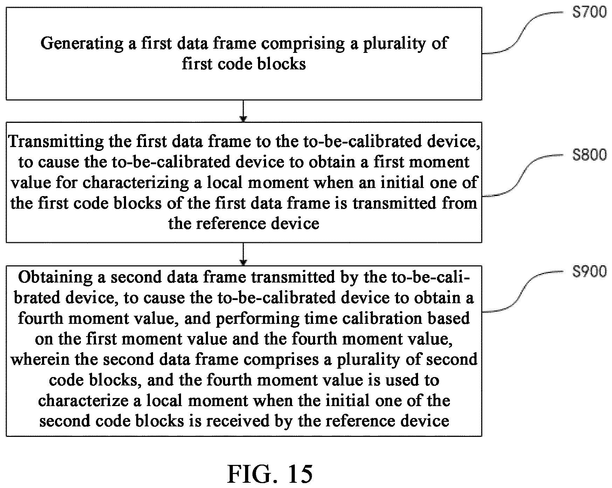

Referring to Fig. 15, Fig. 15 illustrates a flowchart of a time calibration method provided by a further embodiment of the present disclosure, which can be applied to a reference device of a time calibration system. In the example of Fig. 15, the time calibration method includes, but is not limited to, step S700, step S800 and step 5900, specifically:

step 5700, generating a first data frame, where the first data frame includes a plurality of code blocks;
step S800, transmitting the first data frame to the to-be-calibrated device, to cause the to-be-calibrated device to obtain a first moment value that is used to characterize a local moment when an initial first code block of the first data frame is transmitted from the reference device;
step S900, obtaining a second data frame transmitted from the to-be-calibrated device, to cause the to-be-calibrated device to obtain a fourth moment value and perform time calibration based on the first moment value and the fourth moment value, where the second data frame includes a plurality of second code blocks, and the fourth moment value is used to characterize a local moment when an initial second code block is received by the reference device.

It is to be noted that the PTP synchronization message may be carried starting from the initial FG-BU of the first data frame, or may be carried starting from a non-initial FG-BU of the first data frame. This is not specifically limited here.

It is to be noted that when the PTP synchronization message is carried starting from the initial FG-BU of the first data frame, the first moment value can be determined based on a moment when the S code block of the initial FG-BU is transmitted from the Ethernet port of the reference device, and the second moment value can be determined based on a moment when the S code block of the initial FG-BU is received by the to-be-synchronized device, where the first code blocks can be used to characterize all the code blocks or the initial code block (i.e., the S code block) of the FG-BU.

It is to be noted that when the PTP synchronization message is carried starting from a non-initial FG-BU of the first data frame, the first moment value can be determined based on a moment when the initial code block of the FG-BU first carrying the PTP synchronization message (i.e., the S code block of the FG-BU carrying the PTP synchronization message) is transmitted from the Ethernet port of the reference device, and the second moment value can be determined based on a moment when the S code block of the FG-BU carrying the PTP synchronization message is received by the to-be-synchronized device, where the first code block can be used to characterize all the code blocks or the initial code block (i.e., the S code block) of the FG-BU first carrying the PTP synchronization message.

It is to be noted that the PTP response message may be carried starting from the initial FG-BU of the second data frame, or may be carried starting from a non-initial FG-BU of the second data frame. This is not specifically limited here.

It is to be noted that when the PTP response message is carried starting from the initial FG-BU of the second data frame, the third moment value can be determined based on a moment when the S code block of the initial FG-BU is transmitted from the Ethernet port of the to-be-calibrated device, and the fourth moment value can be determined based on a moment when the S code block of the initial FG-BU is received by the to-be-synchronized device, where the second code block can be used to characterize all the code blocks or the initial code block (i.e., the S code block) of the FG-BUs.

It is to be noted that when the PTP response message is carried starting from a non-initial FG-BU of the second data frame, the third moment value can be determined based on a moment when the initial code block of the FG-BU first carrying the PTP response message (i.e., the S code block of the FG-BU carrying the PTP response message) is transmitted from the Ethernet port of the to-be-calibrated device, and the fourth moment value can be determined based on a moment when the S code block of the FG-BU carrying the PTP response message is received by the to-be-synchronized device, where the second code block can be used to characterize all the code blocks or the initial code block (i.e., the S code block) of the FG-BU first carrying the PTP response message.

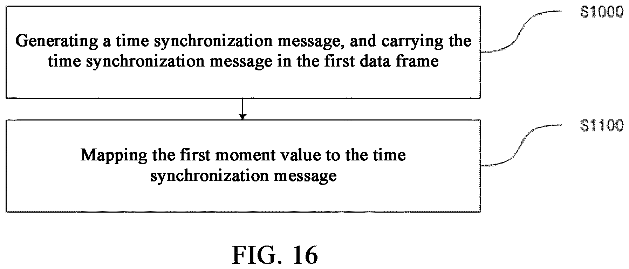

Referring to Fig. 16, Fig. 16 illustrates a flowchart of a time calibration method provided by a further embodiment of the present disclosure. In the example of Fig. 16, the time calibration method includes, but is not limited to, step S 1000 and step S 1100:

step S1000, generating a time synchronization message, and carrying the same in the first data frame;
step S1100, mapping the first moment value to the time synchronization message.

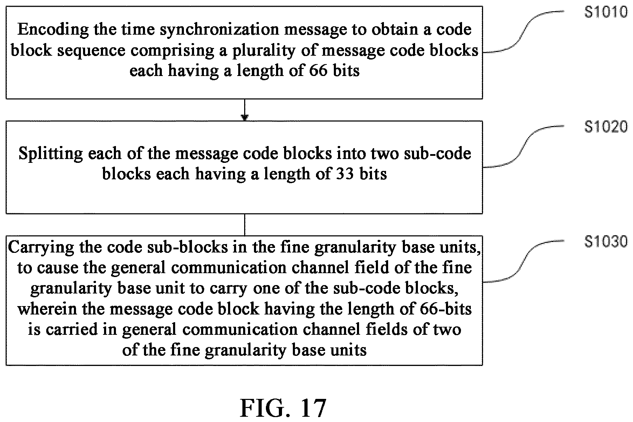

Referring to Fig. 17, Fig. 17 illustrates a specific flowchart of carrying a time synchronization message in a first data frame provided by a further embodiment of the present disclosure. In the example of Fig. 17, step S1000 includes, but is not limited to, step S1010, step S1020 and step S1030.

step S1010, encoding the time synchronization message to obtain a code block sequence that includes a plurality of message code blocks each having a length of 66 bits;
step S1020, splitting each message code block into two sub-code blocks each having a length of 33 bits; and
step S1030, carrying the sub-code blocks in fine grain base units to make a general communication channel field of the fine grain base unit carries a sub-code block, and a message code block with a length of 66 bits is carried in general communication channel fields of two fine grain base units.

Specifically, the GCC field in the FG-BU only has 33 bits, the PTP synchronization message is an Ethernet message having more than 64 bytes, and therefore, an FG-BU cannot carry the PTP response message. Therefore, the present disclosure carries the PTP synchronization message by a plurality of FG-BUs.

Specifically, the PTP synchronization message is first subject to 64/66 encoding to be converted into a code block stream having a length of 66 bits, i.e., a plurality of message code blocks each having a length of 66 bits. A GCC field in an FG-BU only has 33 bits and therefore can only carry a 33-bit PTP message. Therefore, the single message code block is split into two sub-code blocks, to thus cause the GCC field of a single FG-BU to carry a half of the 66-bit code block, i.e., a sub-code block. Hence, the GCC fields in two consecutive FG-BUs carry a complete 66-bit code block. A plurality of consecutive FG-BUs are combined to carry a complete PTP synchronization message.

It is to be noted that the PTP synchronization message may be carried starting from the initial FG-BU of the first data frame, or may be carried starting from a non-initial FG-BU of the first data frame. This is not specifically limited here.

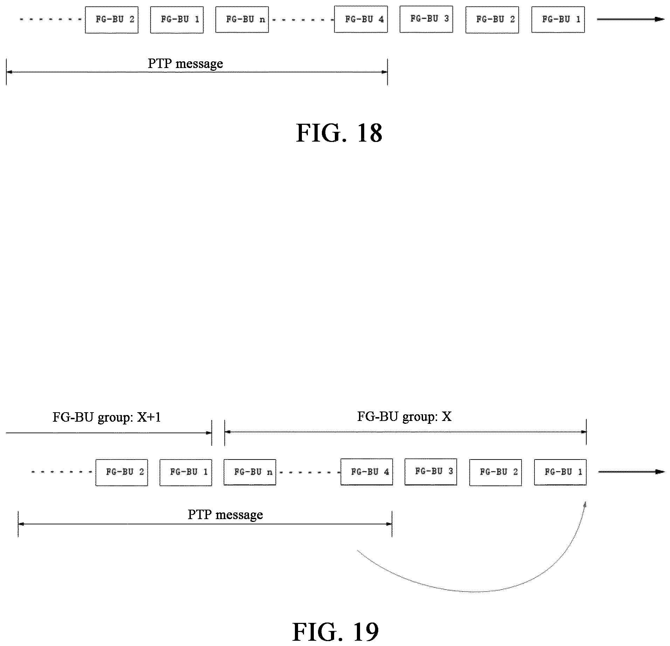

Referring to Fig. 18, Fig. 18 illustrates a schematic diagram of carrying a PTP message in a fine grain base unit provided by an example of the present disclosure. In the example of Fig. 18, the PTP message is carried starting from the fourth FG-BU, and therefore, the transmitting or receiving moment of the initial code block of the fourth FG-BU acts as the transmitting or receiving moment of the PPT message.

Referring to Fig. 19, Fig. 19 illustrates a schematic diagram of carrying a PTP message in a fine grain base unit provided by a further example of the present disclosure. In the example of Fig. 19, the PTP message is carried starting from the fourth FG-BU, but the fourth FG-BU is in the $X^{th}$ FG-BU set (i.e., the $X^{th}$ multiframe comprised of a plurality of FG-BUs), and therefore, the transmitting or receiving moment of the initial code block in the first FG-BU in the $X^{th}$ FG-BU set acts as the transmitting or receiving moment of the PTP message.

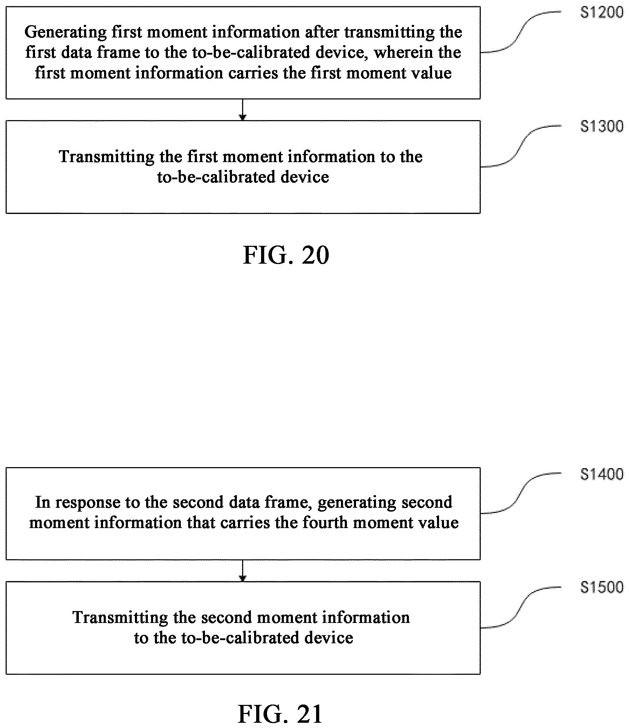

Referring to Fig. 20, Fig. 20 illustrates a flowchart of a time calibration method provided by a further embodiment of the present disclosure. In the example of Fig. 20, the time calibration method includes, but is not limited to, step S1200 and step S1300:

step S1200, generating first moment information after transmitting the first data frame to the to-be-calibrated device, where the first moment information carries a first moment value; and
step S1300, transmitting the first moment information to the to-be-calibrated device.

It would be appreciated that the first moment value may, or may not, be carried in the PTP synchronization message of the first data frame, which is not specifically limited here. In the case where the first moment value is not carried in the PTP synchronization message of the first data frame, the first moment value can be carried in first moment information, the first moment information can be transmitted separately by the reference device to the to-be-calibrated device after the first data frame is transmitted, to avoid the situation where the processing speed of the reference device is not sufficient and thus support the reference device to map the first moment value to the PTP synchronization message of the first data frame after transmitting the initial code block of the first data frame. In this way, the present disclosure can reduce the performance requirements for the reference device, thus improving the stability.

It is to be noted that the first moment information may be a multiframe comprised of a plurality of FG-BUs, or may be of other data structure capable of carrying the first moment value. This is not specifically limited here.

Referring to Fig. 21, Fig. 21 illustrates a flowchart of a time calibration method provided by a further embodiment of the present disclosure. In the example of Fig. 21, the time calibration method includes, but is not limited to, step S1400 and step S1500:

> step S1400, in response to the second data frame, generating second moment information, where the second moment information carries a fourth moment value;
> step S 1500, transmitting the second moment information to the to-be-calibrated device.

It is to be noted that the third moment value may, or may not, be carried in the PTP response message of the second data frame, which is not specifically limited here. In the case where the third moment value is not carried in the PTP response message of the second data frame, the third moment value can be stored directly locally in the to-be-calibrated device; in the case where the third moment value is carried in the PTP response message of the second data frame, the second moment information transmitted by the reference device to the to-be-calibrated can simultaneously carry the third moment value and the fourth moment value.

It is to be noted that the second moment information may be a multiframe comprised of a plurality of FG-BUs, or may be of other data structure capable of carrying the fourth moment value. This is not limited here.

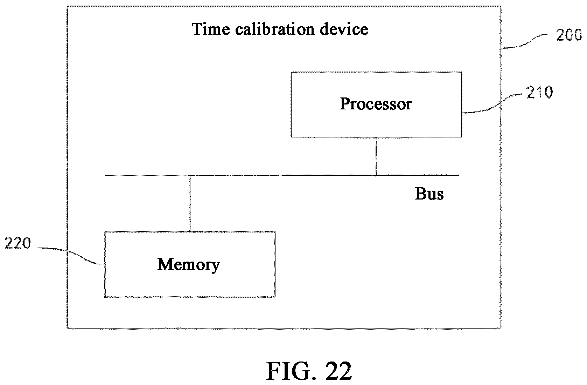

Additionally, referring to Fig. 22, Fig. 22 illustrates a schematic diagram of a time calibration device 200 provided by an embodiment of the present disclosure. The device includes: a memory 220, a processor 210, and a computer program stored on the memory 220 and operable on the processor 210.

The processor 210 and the memory 220 can be connected via a bus or in other manner.

The memory 220 serves as a non-transitory computer-readable storage medium configured to store a non-transitory software program and a non-transitory computer-executable program. In addition, the memory 220 may include a high-speed random access memory, and may also include a non-transitory memory, for example, at least one disk storage device, a flash memory device, or other non-transitory solid-state storage device. In some implementations, the memory 220 may optionally include remote memories arranged remotely relative to the processor 210, which may be connected to the processor 210 via a network. The examples of the network include, but are not limited to, the Internet, an enterprise intranet, a local area network, a mobile communication network, and combinations thereof.

The non-transitory software program and instructions required to implement the time calibration method according to the above embodiments are stored in the memory 220, which execute the time calibration methods according to the above embodiments when executed by the processor 210.

In addition, an embodiment of the present disclosure further provides a computer-readable storage medium which stores computer-executable instructions which are executed by a processor or controller, for example, a processor according to the device or apparatus embodiment as described above, to cause the processor to execute the time calibration methods according to the above embodiments.

It would be appreciated by those skilled in the art that all or part of the steps of the methods and the system may be implemented as software, firmware, hardware and appropriate combinations thereof. Some or all physical components may be implemented as software executed by a processor such as a central processing unit, a digital signal processor or a microcontroller, or may be implemented as hardware, or may be implemented as an integrated circuit such as an application-specific integrated circuit. Such software can be distributed over a computer-readable medium which may include a computer storage medium (or non-transitory medium) and a communication medium (or transient medium). To those skilled in the art, it is common knowledge that the term computer storage medium includes volatile or nonvolatile, removable or non-removable media implemented in any method or technology for storing information (such as computer-readable instructions, data structures, computer program modules or other data). The computer storage medium includes, but is not limited to, an RAM, an ROM, an EEPROM, a flash memory or other memory technologies, a compact disc read-only memory (CD-ROM), a digital versatile disc (DVD) or other optical disc storage, a magnetic cassette, a magnetic tape, disk storage or other magnetic storage devices, or any other medium that may be used for storing desired information and that can be accessed by a computer. In addition, as is known to those skilled in the art, a communication medium generally includes computer-readable instructions, data structures, program modules, or other data in modulated data signals such as carriers or other transmission mechanisms and may include any information delivery medium.

The above has been provided only detailed description of the optimal implementations of the present disclosure, and the present disclosure is not confined to those implementations. Without departing from the spirits of the present disclosure, those skilled in the art are allowed to make equivalent variations or substitutions which are all covered in the scope defined by the claims appended hereto.

**Claims**

**1.** A time calibration method applied to a to-be-calibrated device of a time calibration system comprising a reference device and the to-be-calibrated device, the time calibration method comprising:

obtaining a first data frame transmitted by the reference device, and obtaining a first moment value and a second moment value, the first data frame comprising a plurality of first code blocks, the first moment value for characterizing a local moment when an initial one of the first code blocks is transmitted from the reference device, the second moment value for characterizing a local moment when the initial one of the first code blocks is received by the to-be-calibrated device;

in response to the first data frame, transmitting a second data frame to the reference device, and obtaining a third moment value and a fourth moment value, the second data frame comprising a plurality of second code blocks, the third moment value for characterizing a local moment when an initial one of the second code blocks is transmitted from the to-be-calibrated device, the fourth moment value for characterizing a local moment when the initial one of the second code blocks is received by the reference device;

performing time calibration based on the first moment value, the second moment value, the third moment value and the fourth moment value, to synchronize a local time of the to-be-calibrated device with the reference device.

2. The time calibration method of claim 1, wherein the first data frame carries the first moment value, and obtaining the first moment value and the second moment value comprises:

obtaining the first moment value based on the first data frame; and

in response to the first data frame, determining the second moment value based on the local moment when the to-be-calibrated device receives the initial one of the first code blocks.

3. The time calibration method of claim 2, wherein the first data frame carries a time synchronization message that carries the first moment value; obtaining the first moment value based on the first data frame comprises:

obtaining the time synchronization message based on the first data frame; obtaining the first moment value based on the time synchronization message.

4. The time calibration method of claim 3, wherein the first data frame comprises a plurality of fine grain base units, the fine grain base unit including a plurality of code blocks, the fine grain base unit is provided with a general communication channel field, and the time synchronization message is carried at a position where the general communication channel field is located.

5. The time calibration method of claim 4, wherein the first code blocks are used to characterize all the code blocks or an initial one of the code blocks of the fine grain base units.

6. The time calibration method of claim 4, wherein the time synchronization message is carried in part of the fine grain base units in the first data frame, the first code blocks are used to characterize all the code blocks or an initial one of the code blocks of the fine grain base units carrying the time synchronization message.

7. The time calibration method of claim 4, wherein a local moment of transmitting the first code blocks from the reference device refers to a transmitting moment of an initial code block in the fine grain base units where the time synchronization message is located, which is recorded according to the local time of the to-be-calibrated device, or a transmitting moment of an initial code block of an initial fine grain base unit in the first data frame where the time synchronization message is located;

a local moment of receiving the first code blocks by the to-be-calibrated device refers to a receiving moment of an initial code block of the fine grain base units where the time synchronization message is located, which is recorded according to the local time of the to-be-calibrated device, or a receiving moment of an initial code block of an initial fine grain base unit in the first data frame where the time synchronization message is located.

8. The time calibration method of claim 1, wherein obtaining the first moment value further comprises:

obtaining first moment information transmitted by the reference device; obtaining the first moment value based on the first moment information.

9. The time calibration method of claim 1, wherein the second data frame carries the fourth moment value, and obtaining the third moment value and the fourth moment value comprises:

determining the third moment value based on the local moment when the to-be-calibrated device transmits the initial one of the second code blocks; and obtaining second moment information transmitted by the reference device, and obtaining the fourth moment value based on the second moment information.

10. The time calibration method of claim 1, wherein the second data frame carries a time response message that carries one or more of the first moment value, the second moment value and the third moment value, the second data frame comprises a plurality of fine grain base units, the fine grain base unit comprising a plurality of code blocks, the fine grain base unit is provided with a general communication channel field, and the time response message is carried at a position where the general communication channel filed is located.

11. The time calibration method of claim 10, further comprising:

   encoding the time response message to obtain a code block sequence comprising a plurality of message code blocks each having a length of 66 bits;
   splitting each of the message code blocks into two sub-code blocks each having a length of 33 bits; and
   carrying the sub-code blocks in the fine grain base units to obtain the second data frame, wherein the general communication channel field of the fine grain base unit carries one of the sub-code blocks, one message code block having the length of 66 bits is carried in general communication channel fields of two of the fine grain base units.

12. The time calibration method of claim 10, wherein a local moment of transmitting the second code blocks from the to-be-calibrated device refers to a transmitting moment of an initial code block in the fine grain base units where the time response message is located, which is recorded according to the local time of the to-be-calibrated device, or a transmitting moment of the first code block of an initial fine grain base unit in the second data frame where the time synchronization message is located; and
a local moment of receiving the second code blocks by the to-be-calibrated device refers to a receiving moment of an initial code block of the fine grain base units where the time response message is located, which is recorded according to the local time of the reference device, or a receiving moment of the initial code block of an initial fine grain base unit in the second data frame where the time response message is located.

13. The time calibration method of claim 1, wherein performing the time calibration based on the first moment value, the second moment value, the third moment value and the fourth moment value comprises:

obtaining a delay value based on the first moment value, the second moment value, the third moment value and the fourth moment value, the delay value for characterizing a time required for transmitting a data frame between the reference device and the to-be-calibrated device; and
obtaining an offset value based on the first moment value, the second moment value and the delay value, and performing the time calibration based on the offset value, the offset value for characterizing an offset between the local time of the to-be-calibrated device and that of the reference device.

14. The time calibration method of claim 13, wherein performing the time calibration based on the first moment value, the second moment value, the third moment value and the fourth moment value further comprises:
obtaining the offset value based on the third moment value, the fourth moment value and the delay value, and adjusting the local time of the to-be-calibrated time based on the offset value to complete the time calibration.

15. A time calibration method applied to a reference device of a time calibration system comprising the reference device and a to-be-calibrated device, the time calibration method comprising:

   generating a first data frame comprising a plurality of first code blocks;
   transmitting the first data frame to the to-be-calibrated device, to cause the to-be-calibrated device to obtain a first moment value for characterizing a local moment when an initial one of the first code blocks of the first data frame is transmitted from the reference device; and
   obtaining a second data frame transmitted by the to-be-calibrated device, to cause the to-be-calibrated device to obtain a fourth moment value, and performing time calibration based on the first moment value and the fourth moment value, wherein the second data frame comprises a plurality of second code blocks, and the fourth moment value is used to characterize a local moment when the initial one of the second code blocks is received by the reference device.

16. The time calibration method of claim 15, further comprising:

   generating a time synchronization message, and carrying the time synchronization message in the first data frame;
   mapping the first moment value to the time synchronization message.

**17.** The time calibration method of claim 16, wherein the first data frame includes a plurality of fine grain base units, the fine granularity base unit comprising a plurality of code blocks each having a length of 66 bits, the fine grain base unit is provided with a general communication channel field, and the time synchronization message is carried at a position where the general communication channel filed is located.

**18.** The time calibration method of claim 17, wherein the first data frame comprises a plurality of fine grain base units, and carrying the time synchronization message in the first data frame comprises:

encoding the time synchronization message to obtain a code block sequence comprising a plurality of message code blocks each having a length of 66 bits;
splitting each of the message code blocks into two sub-code blocks each having a length of 33 bits;
carrying the sub-code blocks in the fine grain base units, to cause the general communication channel field of the fine grain base unit to carry one of the sub-code blocks, wherein the message code block having the length of 66-bits is carried in general communication channel fields of two of the fine grain base units.

**19.** The time calibration method of claim 15, further comprising:

generating first moment information after transmitting the first data frame to the to-be-calibrated device, wherein the first moment information carries the first moment value; and
transmitting the first moment information to the to-be-calibrated device.

**20.** The time calibration method of claim 15, further comprising:

in response to the second data frame, generating second moment information that carries the fourth moment value;
transmitting the second moment information to the to-be-calibrated device.

**21.** A time calibration device comprising a memory, a processor and a computer program stored on the memory and operable on the processor, wherein the processor implements the time calibration method of any one of claims 1-14 or claims 15-20 when performing the computer program.

**22.** A computer-readable storage medium, wherein the computer-readable storage medium has computer-executable instructions stored thereon, the computer-executable instructions are used to cause a computer to perform the time calibration method of any one of claims 1-14 or claims 15-20.

July 10, 2024

100

```
┌─────────────────────────────┐
│      Reference device       │
└─────────────────────────────┘
```

```
┌──────────────┐   ┌──────────────┐   ┌──────────────┐
│ To-be-calibrated │ │ To-be-calibrated │ │ To-be-calibrated │
│     device       │ │     device       │ │     device       │
└──────────────┘   └──────────────┘   └──────────────┘
```

110                 110                 110

# FIG. 1

Obtaining a first data frame transmitted by the reference device, and obtaining a first moment value and a second moment value, the first data frame comprising a plurality of first code blocks, the first moment value for characterizing a local moment when an initial one of the first code blocks is transmitted from the reference device, the second moment value for characterizing a local moment when the initial one of the first code blocks is received by the to-be-calibrated device   S100

In response to the first data frame, transmitting a second data frame to the reference device, and obtaining a third moment value and a fourth moment value, the second data frame comprising a plurality of second code blocks, the third moment value for characterizing a local moment when an initial one of the second code blocks is transmitted from the to-be-calibrated device, the fourth moment value for characterizing a local moment when the initial one of the second code blocks is received by the reference device   S200

Performing time calibration based on the first moment value, the second moment value, the third moment value and the fourth moment value, to synchronize a local time of the to-be-calibrated device with the reference device   S300

FIG. 2

| S code blocks | D code blocks | T code blocks |
|---|---|---|

## FIG. 3

FIG. 4

| Input Data | Sync | Block Payload | | | | | | | | |
|---|---|---|---|---|---|---|---|---|---|---|
| **Bit Position:** | 0 1 | 2 | | | | | | | | 65 |
| **Data Block Format:** | | | | | | | | | | |
| $D_0\,D_1\,D_2\,D_3\,D_4\,D_5\,D_6\,D_7$ | 01 | $D_0$ | $D_1$ | $D_2$ | $D_3$ | $D_4$ | $D_5$ | $D_6$ | $D_7$ | |
| **Control Block Formats:** | | Block Type Field | | | | | | | | |
| $C_0\,C_1\,C_2\,C_3\,C_4\,C_5\,C_6\,C_7$ | 10 | 0x1E | $C_0$ | $C_1$ | $C_2$ | $C_3$ | $C_4$ | $C_5$ | $C_6$ | $C_7$ |
| $S_0\,D_1\,D_2\,D_3\,D_4\,D_5\,D_6\,D_7$ | 10 | 0x78 | | $D_1$ | $D_2$ | $D_3$ | $D_4$ | $D_5$ | $D_6$ | $D_7$ |
| $O_0\,D_1\,D_2\,D_3\,Z_4\,Z_5\,Z_6\,Z_7$ | 10 | 0x4B | | $D_1$ | $D_2$ | $D_3$ | $O_0$ | 0x000_0000 | | |
| $T_0\,C_1\,C_2\,C_3\,C_4\,C_5\,C_6\,C_7$ | 10 | 0x87 | ///// | $C_1$ | $C_2$ | $C_3$ | $C_4$ | $C_5$ | $C_6$ | $C_7$ |
| $D_0\,T_1\,C_2\,C_3\,C_4\,C_5\,C_6\,C_7$ | 10 | 0x99 | $D_0$ | ///// | $C_2$ | $C_3$ | $C_4$ | $C_5$ | $C_6$ | $C_7$ |
| $D_0\,D_1\,T_2\,C_3\,C_4\,C_5\,C_6\,C_7$ | 10 | 0xAA | $D_0$ | $D_1$ | ///// | $C_3$ | $C_4$ | $C_5$ | $C_6$ | $C_7$ |
| $D_0\,D_1\,D_2\,T_3\,C_4\,C_5\,C_6\,C_7$ | 10 | 0xB4 | $D_0$ | $D_1$ | $D_2$ | ///// | $C_4$ | $C_5$ | $C_6$ | $C_7$ |
| $D_0\,D_1\,D_2\,D_3\,T_4\,C_5\,C_6\,C_7$ | 10 | 0xCC | $D_0$ | $D_1$ | $D_2$ | $D_3$ | ///// | $C_5$ | $C_6$ | $C_7$ |
| $D_0\,D_1\,D_2\,D_3\,D_4\,T_5\,C_6\,C_7$ | 10 | 0xD2 | $D_0$ | $D_1$ | $D_2$ | $D_3$ | $D_4$ | ///// | $C_6$ | $C_7$ |
| $D_0\,D_1\,D_2\,D_3\,D_4\,D_5\,T_6\,C_7$ | 10 | 0xE1 | $D_0$ | $D_1$ | $D_2$ | $D_3$ | $D_4$ | $D_5$ | | $C_7$ |
| $D_0\,D_1\,D_2\,D_3\,D_4\,D_5\,D_6\,T_7$ | 10 | 0xFF | $D_0$ | $D_1$ | $D_2$ | $D_3$ | $D_4$ | $D_5$ | $D_6$ | |

# FIG. 5

| | | Block Type(S₀) 0x78 | 0x55 | 0x55 | 0x55 | 0x55 | 0x55 | 0x55 | 0xD5 |
|---|---|---|---|---|---|---|---|---|---|
| 1 | 10 | | | | | | | | |
| 2 | 01 | OH (7 bytes) | | | | | | | |
| | 01 | Payload (1560 Bytes) | | | | | | | |
| | 01 | | | | | | | | |
| 196 | 01 | | | | | | | | |
| 197 | 10 | Block Type(T₇) 0xFF | | | | | | | |

fg-BU

# FIG. 6

Sub-slot 1  Sub-slot 2  Sub-slot 24

8×66B Code blocks  8×66B Code blocks  8×66BCode blocks

66B→65B Compression

Sub-slot 1  Sub-slot 2  Sub-slot 24

8×65B Code blocks  8×65B Code blocks  8×65BCode blocks

Adding overhead

56bit

| OH | Payload |

Sequentially filled in the payloads of the D
code blocks and the T7 code block of fg-BU

fg-BU | $S_0$ | 195 D blocks | $T_7$

197×66B Code blocks

FIG. 7

Obtaining the first moment value based on the first data frame

S110

In response to the first data frame, determining the second moment value based on the local moment when the to-be-calibrated device receives the initial one of the first code blocks

S120

FIG. 8

Obtaining the time synchronization message
based on the first data frame
— S111

Obtaining the first moment value based on
the time synchronization message
— S112

# FIG. 9

| resv | MFI | GCC flag | resv OO | C | CR | CA | client ID | sub slot ID | resv | resv | CRC |
|---|---|---|---|---|---|---|---|---|---|---|---|
| | | | | | | | GCC(33bit) | | | | |

FIG. 10

Obtaining first moment information transmitted
by the reference device

S130

Obtaining the first moment value based on the first
moment information

S140

FIG. 11

Determining the third moment value based on the local
moment when the to-be-calibrated device transmits
the initial one of the second code blocks

S210

Obtaining second moment information transmitted by
the reference device, and obtaining the fourth moment
value based on the second moment information

S220

# FIG. 12

Encoding the time response message to obtain a code block sequence comprising a plurality of message code blocks each having a length of 66 bits — S400

Splitting each of the message code blocks into two sub-code blocks each having a length of 33 bits — S500

Carrying the sub-code blocks in the fine granularity base units to obtain the second data frame, wherein the general communication channel field of the fine granularity base unit carries one of the sub-code blocks, one message code block having the length of 66 bits is carried in general communication channel fields of two of the fine granularity base units — S600

FIG. 13

Obtaining a delay value based on the first moment value, the second moment value, the third moment value and the fourth moment value, the delay value for characterizing a time required for transmitting a data frame between the reference device and the to-be-calibrated device

S310

Obtaining an offset value based on the first moment value, the second moment value and the delay value, and performing the time calibration based on the offset value, the offset value for characterizing an offset between the local time of the to-be-calibrated device and that of the reference device

S320

FIG. 14

Generating a first data frame comprising a plurality of
first code blocks

S700

Transmitting the first data frame to the to-be-calibrated device,
to cause the to-be-calibrated device to obtain a first moment
value for characterizing a local moment when an initial one of
the first code blocks of the first data frame is transmitted from
the reference device

S800

Obtaining a second data frame transmitted by the to-be-calibrated device, to cause the to-be-calibrated device to obtain a
fourth moment value, and performing time calibration based
on the first moment value and the fourth moment value,
wherein the second data frame comprises a plurality of second
code blocks, and the fourth moment value is used to
characterize a local moment when the initial one of the
second code blocks is received by the reference device

S900

FIG. 15

Generating a time synchronization message, and carrying the time synchronization message in the first data frame — S1000

Mapping the first moment value to the time synchronization message — S1100

FIG. 16

| | |
|---|---|
| Encoding the time synchronization message to obtain a code block sequence comprising a plurality of message code blocks each having a length of 66 bits | S1010 |
| Splitting each of the message code blocks into two sub-code blocks each having a length of 33 bits | S1020 |
| Carrying the code sub-blocks in the fine granularity base units, to cause the general communication channel field of the fine granularity base unit to carry one of the sub-code blocks, wherein the message code block having the length of 66-bits is carried in general communication channel fields of two of the fine granularity base units | S1030 |

## FIG. 17

FG-BU 2 | FG-BU 1 | FG-BU n | - - - - - | FG-BU 4 | FG-BU 3 | FG-BU 2 | FG-BU 1

PTP message

## FIG. 18

FG-BU group: X+1 | FG-BU group: X

FG-BU 2 | FG-BU 1 | FG-BU n | - - - - - | FG-BU 4 | FG-BU 3 | FG-BU 2 | FG-BU 1

PTP message

## FIG. 19

Generating first moment information after transmitting the first data frame to the to-be-calibrated device, wherein the first moment information carries the first moment value — S1200

Transmitting the first moment information to the to-be-calibrated device — S1300

FIG. 20

In response to the second data frame, generating second moment information that carries the fourth moment value — S1400

Transmitting the second moment information to the to-be-calibrated device — S1500

FIG. 21

FIG. 22

## INTERNATIONAL SEARCH REPORT

| | International application No. |
|---|---|
| | **PCT/CN2022/137300** |

**A. CLASSIFICATION OF SUBJECT MATTER**

H04W 56/00(2009.01)i

According to International Patent Classification (IPC) or to both national classification and IPC

**B. FIELDS SEARCHED**

Minimum documentation searched (classification system followed by classification symbols)

H04W H04Q H04L

Documentation searched other than minimum documentation to the extent that such documents are included in the fields searched

Electronic data base consulted during the international search (name of data base and, where practicable, search terms used)

WPABSC, CNTXT, WOTXT, USTXT, EPTXT: 时间, 校准, 码块, 帧, 时刻, 发送, 接收, 差值, 阈值, 同步, time, calibration, code block, frame, timing, transmit, receive, difference, threshold, synchronization

**C. DOCUMENTS CONSIDERED TO BE RELEVANT**

| Category* | Citation of document, with indication, where appropriate, of the relevant passages | Relevant to claim No. |
|---|---|---|
| X | CN 113765839 A (HUAWEI TECHNOLOGIES CO., LTD.) 07 December 2021 (2021-12-07) description, paragraphs 0223-0232, and figure 2 | 1-3, 8, 9, 13-16, 19-22 |
| A | CN 107579810 A (STATE GRID CORPORATION OF CHINA et al.) 12 January 2018 (2018-01-12) entire document | 1-22 |
| A | CN 110278047 A (ALIBABA GROUP HOLDING LIMITED) 24 September 2019 (2019-09-24) entire document | 1-22 |
| A | CN 112422221 A (SHENZHEN GUANGHETONG WIRELESS COMMUNICATION SOFTWARE CO., LTD.) 26 February 2021 (2021-02-26) entire document | 1-22 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **16 February 2023** | **20 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/137300**

| Patent document cited in search report | | | Publication date (day/month/year) | Patent family member(s) | Publication date (day/month/year) |
|---|---|---|---|---|---|
| CN | 113765839 | A | 07 December 2021 | None | |
| CN | 107579810 | A | 12 January 2018 | None | |
| CN | 110278047 | A | 24 September 2019 | None | |
| CN | 112422221 | A | 26 February 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111509933X